(19) **Europäisches Patentamt** / **European Patent Office** / **Office européen des brevets**

(11) **EP 1 466 139 B1**

(12) **FASCICULE DE BREVET EUROPEEN**

(45) Date de publication et mention
de la délivrance du brevet:
**23.02.2011 Bulletin 2011/08**

(21) Numéro de dépôt: **02796873.4**

(22) Date de dépôt: **26.11.2002**

(51) Int Cl.:
*G01C 21/16* (2006.01)　　*G01C 5/00* (2006.01)
*G01C 21/00* (2006.01)　　*G01S 5/14* (2006.01)

(86) Numéro de dépôt international:
**PCT/FR2002/004045**

(87) Numéro de publication internationale:
**WO 2003/046482 (05.06.2003 Gazette 2003/23)**

(54) **CENTRALE DE NAVIGATION INERTIELLE HYBRIDE A INTEGRITE AMELIOREE EN ALTITUDE**

HYBRIDE TRÄGHEITSNAVIGATIONSZENTRALE MIT VERBESSERTER HÖHENINTEGRITÄT

HYBRID INERTIAL NAVIGATION UNIT WITH ENHANCED INTEGRITY IN ALTITUDE

(84) Etats contractants désignés:
**DE FR GB IT**

(30) Priorité: **27.11.2001 FR 0115318**

(43) Date de publication de la demande:
**13.10.2004 Bulletin 2004/42**

(73) Titulaire: **Thales**
**75008 Paris (FR)**

(72) Inventeurs:
• **Coatantiec, Jacques**
**94117 Arcueil Cedex (FR)**

• **Juillaguet, Sébastien**
**94117 Arcueil Cedex (FR)**

(74) Mandataire: **Guérin, Michel et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**FR-A- 2 704 644　　US-A- 6 157 891**
**US-B1- 6 216 064**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne les instruments d'aide à la navigation et au pilotage, et en particulier ceux qui sont destinés à la navigation aérienne dans laquelle les contraintes de précision sur la position et la vitesse sont élevées et dans laquelle il est nécessaire de connaître à tout moment l'intégrité de l'information donnée par les instruments de mesure de position et de vitesse.

L'utilisation de centrales de navigation inertielles dans les aéronefs est très classique aujourd'hui. Ces centrales utilisent des accéléromètres pour déterminer des accélérations selon des axes définis par rapport à l'aéronef, des gyromètres pour déterminer des vitesses de rotation angulaires par rapport à des axes également définis par rapport à l'aéronef, et éventuellement d'autres capteurs tels qu'un baro-altimètre. Par intégration des mesures gyrométriques, on détermine l'orientation de l'aéronef à un moment donné ; par intégration des mesures accélérométriques, qui peuvent être rapportées à un repère terrestre extérieur à l'aéronef grâce à la connaissance de l'orientation de l'aéronef, on détermine les composantes de vitesse de l'aéronef dans ce repère terrestre. Par intégration des vitesses, on détermine des positions géographiques.

Les capteurs de mesure sont cependant imparfaits et présentent des erreurs intrinsèques ou biais de mesure, qui peuvent d'ailleurs varier au cours de la navigation. De plus ils sont sujets aux bruits de mesure, en ce sens que se superposent au signal utile, représentant la grandeur physique recherchée, des variations aléatoires ne correspondant pas aux variations de la grandeur mesurée. Les signaux électriques de mesure sont de plus traités par des circuits électroniques qui introduisent eux-mêmes du bruit.

Les biais et bruits de mesure sont d'autant plus gênants que les calculs de position faits à partir des résultats de mesure des capteurs impliquent des intégrations. L'intégration engendre une dérive de la valeur mesurée, dérive qui croît progressivement au cours du temps dès lors que la valeur intégrée est biaisée au départ. Une double intégration (intégrale d'accélération pour donner la vitesse puis intégrale de vitesse pour donner la position) accroît encore cette dérive dans des proportions considérables.

En résumé, les centrales inertielles sont très précises sur une très courte durée mais sont sujettes, du fait de l'intégration temporelle systématique des biais, à une dérive importante qui oblige à les recaler périodiquement à partir d'autres informations de position (ou de vitesse).

Pour ce qui concerne l'altitude de l'avion, un recalage peut être effectué à partir d'un baro-altimètre, qui mesure l'altitude en fonction de données de pression mesurées et d'indications météorologiques locales. La centrale inertielle est alors une centrale "baro-inertielle" qui hybride les mesures inertielles et les mesures d'altitude barométriques. Toutefois les mesures d'altitude barométriques sont peu fiables, notamment en présence de phénomènes d'inversions de températures dans les couches atmosphériques.

Plus récemment, on a commencé à recaler les centrales inertielles à partir de récepteurs de positionnement par satellites, embarqués dans les aéronefs et tirant des informations de position et de vitesse, en repère terrestre, à partir des signaux qu'ils reçoivent des satellites.

On réalise ainsi des centrales hybrides profitant à la fois de l'excellente qualité de mesure à très court terme des centrales inertielles (mesure très faiblement bruitée) et de la grande précision de position géographique offerte par les systèmes de positionnement par satellites.

L'hybridation des deux systèmes, système inertiel et système de positionnement par satellites, se fait en général par l'utilisation d'algorithmes de filtrage, généralement connus sous le nom de filtrages de Kalman. Il s'agit d'un filtrage numérique effectué au cours des calculs qui permettent de déterminer une position dite "position hybride" à partir des informations provenant de la centrale inertielle et des informations données par le récepteur de positionnement par satellites.

En cas de perte ou de dégradation des mesures de positionnement par satellites (dont il faut rappeler qu'elles peuvent facilement être perdues parce que le signal émis par les satellites est extrêmement faible et qu'elles peuvent être erronées, par exemple à cause de la présence de multitrajets entre un satellite et le récepteur), le filtrage de Kalman permet de continuer à calculer une position hybride qui est de type inertielle (c'est-à-dire analogue à celle que fournirait une centrale inertielle toute seule) mais qui est corrigée des erreurs de dérive de la centrale ; en effet, le filtrage de Kalman calcule en permanence ces erreurs et peut se servir des erreurs repérées juste avant la perte des signaux satellites pour continuer à corriger la centrale après cette perte jusqu'au moment où les signaux satellites redeviennent disponibles.

Le brevet US 6 157 891 décrit une telle centrale inertielle fournissant une position hybride filtrée.

Cependant, la précision et la fiabilité des centrales inertielles hybrides corrigées par récepteurs de positionnement par satellite n'est pas suffisante pour certaines applications, telles que l'atterrissage automatique des aéronefs.

Les mesures d'altitude sont particulièrement critiques en phase d'atterrissage, que ce soit dans une phase préliminaire de descente à quelques centaines de mètres au-dessus du sol (typiquement pour la percée d'une couche de nuages obstruant la visibilité), ou en phase finale d'atterrissage sur une piste. Dans le premier cas, on souhaite une précision en altitude d'environ 50 mètres, que les récepteurs de positionnement par satellites ont du mal à fournir d'une manière suffisamment fiable. Dans le deuxième cas, on souhaite une précision en altitude de l'ordre de 5 mètres, et pour cela on assiste le récepteur de positionnement par satellites par une station locale au sol, pour le faire fonctionner en différentiel (système DGPS), mais, malgré cette aide, les récepteurs peuvent difficilement fournir la précision de 5 mètres attendue.

Un but de la présente invention est donc d'améliorer les centrales de navigation inertielle hybrides en leur adjoignant des moyens supplémentaires permettant d'améliorer la précision des mesures d'altitude fournies.

Pus généralement, on souhaite améliorer non seulement la précision de la mesure d'altitude, mais aussi la connaissance de la précision associée à une mesure, étant donné que cette précision n'a pas une valeur fixe (elle dépend de très nombreux paramètres) et qu'elle peut être utile pour permettre de prendre des décisions. Par exemple, en cas de descente au-dessous d'un certain seuil de précision, le calculateur de bord de l'aéronef peut déclencher une alarme visant à interdire de procéder à un atterrissage.

Cette précision est définie par une valeur de confiance qu'on peut attribuer à la mesure effectuée, cette valeur de confiance s'exprimant sous forme d'un rayon de protection, en présence ou en absence de panne. Le rayon de protection est une valeur de distance, autour d'une position mesurée (horizontalement ou verticalement), tellle qu'on peut considérer que la position exacte est effectivement située dans ce rayon autour de la mesure faite, avec un degré de confiance choisi, c'est-à-dire avec une probabilité maximale d'erreur déterminée.

Selon l'invention, on propose un système d'aide à la navigation embarqué dans un aéronef, comprenant une centrale de navigation inertielle fournissant une position horizontale et une altitude en repère terrestre, et comprenant au moins un moyen (en principe une radiosonde) pour founir une mesure de la hauteur de l'aéronef par rapport au sol, une base de données de terrain fournissant une altitude du sol correspondant à la position horizontale délivrée par la centrale inertielle, et des moyens pour corriger l'altitude fournie par la centrale inertielle en utilisant les données issues du moyen pour fournir la hauteur et de la base de données de terrain, caractérisé en ce qu'il comprend en outre des moyens pour fournir un rayon de protection associé à la position horizontale fournie par la centrale inertielle et des moyens de calcul fournissant un rayon de protection associé à l'altitude corrigée, ces derniers moyens de calcul comportant des moyens pour calculer une dispersion de l'altitude du sol telle que contenue dans la base de données de terrain, à l'intérieur d'une zone de terrain limitée centrée sur la position horizontale fournie par la centrale inertielle.

La dispersion de l'altitude est calculée de préférence dans une zone dont le rayon est défini à partir du rayon de protection de la position horizontale. De préférence, elle est calculée dans une zone dont le rayon est la somme du rayon de protection de la position horizontale et d'une valeur liée à une imprécision de détection du moyen pour fournir la hauteur. Si la hauteur est fournie par une radiosonde, la valeur rajoutée au rayon de protection est de préférence le rayon d'un cercle d'illumination radioélectrique du sol par la radiosonde.

Les moyens de calcul du rayon de protection de l'altitude corrigée comprennent en principe un moyen de calcul d'une somme quadratique d'un écart-type ($\Sigma$alt_rad) lié au calcul de la somme de la hauteur par rapport au sol (HAUT_RAD) et de l'attitude du sol (ALT_GND), et d'un écart-type ($\Sigma$alt_hyb) lié à l'altitude issue de la centrale inertielle (ALT_HYB), et un moyen pour calculer un écart-type et un rayon de protection de l'altitude corrigée, à partir de la somme quadratique calculée et moyennée sur N échantillons de mesure successifs.

L'écart type lié au calcul de la somme de la hauteur par rapport au sol et de l'altitude du sol est de préférence la moyenne quadratique de plusieurs écarts types parmi lesquels un écart-type ($\Sigma$disp) représentant la dispersion d'altitude du sol.

La détermination de hauteur par rapport au sol se fait de préférence par une radiosonde. Une radiosonde fonctionne comme un radar : elle émet verticalement des signaux radioélectriques à haute fréquence et elle mesure la durée qui sépare l'émission de ces signaux de la réception d'un écho ; connaissant la fréquence émise, elle calcule la distance qui sépare l'avion du sol.

Une radiosonde fournit des hauteurs d'autant plus précises que l'aéronef qui la porte est plus près du sol. La précision peut être de l'ordre de 1%.

Pour corriger l'altitude fournie par la centrale inertielle, on commence par calculer un écart entre cette altitude et une altitude déterminée à la fois à partir de la hauteur de l'aéronef, délivrée par la radiosonde, et à partir de l'altitude du sol délivrée par la base de données de terrain. En principe, on fait simplement la différence entre d'une part l'altitude hybride et d'autre part la somme de l'altitude du sol et la hauteur de l'aéronef.

On pourrait corriger l'altitude fournie par la centrale inertielle en la remplaçant purement et simplement par l'altitude ainsi fournie par la radiosonde associée à la base de données de terrain. Toutefois, on préfère effectuer un filtrage numérique de l'écart mesuré pour calculer une correction plus appropriée à appliquer à l'altitude fournie par la centrale inertielle : on lisse en fait la valeur de l'écart sur plusieurs mesures correspondant à plusieurs valeurs successives de position et d'altitude fournies par la centrale inertielle.

Le lissage peut se faire par moyennage de N écarts d'altitude successifs, et la correction d'altitude apportée à la centrale inertielle est alors la moyenne glissante de N écarts successifs correspondant aux N dernières mesures de position et d'altitude.

Mais le lissage peut aussi se faire par une boucle de filtrage numérique établissant une valeur de correction d'altitude par intégration d'un signal d'erreur représentant la différence entre l'écart d'altitude constaté et la correction d'altitude effectuée par la boucle pour une mesure précédente.

Pour réaliser l'hybridation en calculant en même temps une indication de la fiabilité ou la précision de la mesure, et en améliorant cette fiabilité par rapport à celle que donnerait normalement la centrale inertielle (hybridée ou non avec un récepteur de positionnement par satellites), on utilisera une base de données de terrain embarquée dans l'aéronef, d'une manière qu'on peut résumer ainsi : la centrale inertielle fournit des données de position horizontale (longitude et latitude) et une altitude. La position horizontale est affectée d'un rayon de protection (on reviendra plus loin sur la notion de rayon de protection associé à une probabilité de non-détection donnée). La centrale inertielle fournit une altitude avec un rayon de protection associé trop grand par rapport à ce qu'on souhaite. L'association de la radiosonde avec la base de données de terrain fournit des informations avec un écart-type qu'on peut calculer (on reviendra sur ce calcul). Pour associer un rayon de protection à la mesure d'altitude corrigée par la radiosonde et la base de données de terrain, on procède de préférence de la manière suivante : on calcule la dispersion d'altitude du sol telle que contenue dans la base de données, à l'intérieur d'une zone limitée centrée sur la position horizontale donnée par la centrale inertielle ; cette dispersion est ensuite associée à une précision intrinsèque de la base de données de terrain et à une précision intrinsèque de la radiosonde ; la combinaison de ces trois données de précision peut s'exprimer sous forme d'un écart-type de mesure d'altitude par la radiosonde ; cet écart-type peut être combiné à l'écart-type de l'altitude fournie par la centrale inertielle, puis moyenné sur un certain nombre d'échantillons ou filtré, pour fournir un écart-type global de la correction d'altitude apportée à la sortie de la centrale inertielle et donc un rayon de protection associé à l'altitude corrigée.

En particulier, lorsqu'on calcule la correction d'altitude par moyennage ou filtrage des mesures successives de l'écart qui existe entre la centrale inertielle d'une part et la radiosonde associée à la base de données de terrain d'autre part, on peut calculer un écart-type global de la correction appliquée. Un rayon de protection (correspondant à l'écart-type multiplié par un coefficient) peut alors être associé à l'altitude corrigée. Une alarme peut être déclenchée au cas où les écarts-types successifs ne répondent pas à un modèle préétabli compte-tenu de la nature a priori gaussienne des écarts constatés.

Pour déterminer la dispersion d'altitude du sol, qui entre dans le calcul du rayon de protection de l'altitude corrigée, on mesurera de préférence les écarts d'altitude dans une zone dont le rayon est défini à partir du rayon de protection de la position horizontale fournie par la centrale inertielle. Le rayon de cette zone pourra également prendre en compte le rayon de la zone de sol illuminée par la radiosonde (dont l'angle d'ouverture peut facilement atteindre 45°).

On comprendra qu'on utilise selon l'invention une base de données de terrain embarquée dans l'aéronef, mais, contrairement à ce qui a pu se faire dans l'art antérieur, cette base de données ne sert pas à améliorer l'intégrité de la mesure de position horizontale (ce que faisait une corrélation de terrain dans le passé), mais elle sert à améliorer l'intégrité de la mesure d'altitude. Cette amélioration vient de ce que non seulement on utilise l'information d'altitude du sol contenue dans la base de données, mais on utilise aussi un calcul de dispersion d'altitudes dans une zone située autour de la position horizontale de l'aéronef, cette zone étant définie principalement par le rayon de protection associé à la position horizontale fournie par la centrale inertielle.

On notera aussi que la centrale inertielle qu'on améliore grâce à la radiosonde associée à une base de données de terrain peut être une centrale inertielle simple ou une centrale baro-inertielle, ou de préférence une centrale inertielle ou baro-inertielle hybridée avec un récepteur de positionnement par satellites ; dans ce cas, l'information de position qui est introduite dans la base de données de terrain est la position horizontale hybride fournie par la centrale hybridée et l'altitude corrigée grâce à la radiosonde est l'altitude hybride.

D'autres caractéristiques et avantages de l'invention apparaîtront à la lecture de la description détaillée qui suit et qui est faite en référence aux dessins annexés dans lesquels:

- la figure 1 représente schématiquement le principe d'une centrale inertielle hybridée à laquelle on a associé une radiosonde et une base de données de terrain embarquée ;
- la figure 2 représente le principe du calcul de l'altitude corrigée;
- la figure 3 représente une variante de calcul de l'altitude corrigée ;
- la figure 4 représente le principe du calcul du rayon de protection de l'altitude corrigée ;
- la figure 5 représente le principe du calcul de dispersion d'attitude du sol, qui entre dans le calcul du rayon de protection de l'altitude corrigée.

On décrira l'invention dans le cas d'une centrale inertielle hybridée avec un récepteur de positionnement par satellites. La centrale inertielle hybridée comporte une centrale inertielle proprement dite C_INERT, un récepteur de positionnement par satellites, qu'on appellera par la suite récepteur GPS en référence au système de positionnement le plus courant dit « Global Positionning System », et un calculateur électronique d'hybridation CALC_HYB.

La centrale inertielle C_INERT est le plus souvent composée de

- plusieurs accéléromètres, typiquement trois, d'orientations fixes par rapport à l'aéronef, fournissant des valeurs d'accélération selon ces axes,

- plusieurs gyromètres, typiquement trois, ayant chacune un axe fixe par rapport à l'avion et fournissant des valeurs de vitesse de rotation angulaire autour de ces axes,
- un calculateur qui détermine des données numériques de position géographique (Lat, Lon, Alt), vitesse géographique (Vn, Ve, Vv), attitudes en cap roulis et tangage $\varphi$, $\theta$, $\psi$), etc. à partir des indications fournies par les accéléromètres et gyromètres ; le calculateur fournit aussi une impulsion de marquage temporel définissant l'instant auquel ces données sont valides.

Toutes ces données, appelées ci-après données inertielles brutes D_INERT, sont fournies par la centrale inertielle au calculateur d'hybridation.

Eventuellement, d'autres capteurs peuvent être associés à la centrale pour affiner les calculs, tels qu'un altimètre barométrique (ALT-BARO). Le calculateur de la centrale inertielle utilise alors les informations de ce ou ces capteurs supplémentaires en même temps que les informations des gyromètres et accéléromètres.

Le récepteur GPS fournit classiquement une position géographique en longitude, latitude et altitude, appelée aussi position résolue, incluant aussi un temps de mesure de position. Le récepteur fournit en principe aussi des vitesses de déplacement par rapport à la terre. L'ensemble de cette position, ce temps et cette vitesse est appelée point PVT. Une impulsion de marquage temporel définissant l'instant de validité du point PVT est également fournie.

Le récepteur GPS utilise pour son fonctionnement une mesure de distances entre le récepteur et chaque satellite en vue du récepteur. Ces distances sont en réalité des pseudo-distances $PD_i$ (i désignant un numéro de satellite) obtenues sous forme de durées de propagation de signal entre le satellite de rang i et le récepteur le long de l'axe (axe satellite) joignant le satellite et le récepteur. C'est la combinaison des pseudo-distances sur plusieurs axes satellites avec la connaissance des positions des satellites à un moment donné (envoyée sous forme d'éphémérides par les satellites eux-mêmes) qui permet de calculer la position résolue PVT.

L'hybridation entre la centrale inertielle et le récepteur GPS peut se faire à partir de la position résolue et/ou des pseudo-distances $PD_i$.

Le récepteur GPS fournit au calculateur d'hybridation CALC_HYB toutes ces données (et éventuellement d'autres encores : éphémérides, rapports signal/bruit, rayons de protection propre du récepteur GPS, etc.), désignées sur la figure par D_GPS (données GPS).

Les données inertielles brutes D_INERT et les données GPS sont traitées dans le calculateur d'hybridation pour fournir des données inertielles hybrides D_HYB qui sont une attitude hybride, une vitesse hybride et une position hybride. Dans la position hybride, le calculateur fournit une position horizontale hybride POS_HOR_HYB sous forme d'une longitude et une latitude en repère terrestre, et une altitude hybride ALT_HYB en repère terrestre. Le calculateur d'hybridation fournit aussi une ou plusieurs valeurs de rayon de protection représentant la précision des données issues de l'hybridation, notamment un rayon de protection de la position horizontale et un rayon de protection de l'altitude hybride.

L'hybridation est réalisée par des algorithmes de filtrage de Kalman pour obtenir à la fois les qualités de stabilité et d'absence de bruit à court terme de la centrale inertielle et la précision très élevée mais fortement bruitée à court terme du récepteur GPS. Le filtrage de Kalman permet de prendre en compte les erreurs de comportement intrinsèques de la centrale inertielle C_INERT, et de corriger ces erreurs. L'erreur de mesure de la centrale inertielle est déterminée au cours du filtrage ; elle est ajoutée à la mesure fournie par la centrale pour donner une mesure hybride dans laquelle les erreurs dues au comportement de la centrale sont minimisées.

A la centrale inertielle ainsi hybridée sont associées une radiosonde RAD_SONDE et une base de données numérique de terrain DTED (initiales pour l'anglais "Digital Terrain Elevation Data") destinées à améliorer la précision de l'altitude hybride ALT_HYB fournie par la centrale inertielle hybridée.

La radiosonde fournit une mesure de la hauteur HAUT_RAD de l'aéronef au-dessus du sol à un instant de mesure.

La base de données de terrain contient les altitudes géographiques, dans un repère terrestre, d'un réseau de points régulièrement répartis dans la région survolée par l'aéronef au cours d'un vol déterminé. Le maillage de ce réseau est plus ou moins serré selon la précision désirée. L'altitude donnée pour un point géographique est en principe l'altitude du point le plus élevé d'un carré qui est centré sur ce point géographique et dont le côté est égal au pas du réseau. La base de données est adressable en position horizontale (longitude et latitude), et fournit une altitude pour cette position.

Les données de la centrale inertielle hybride, de la radiosonde et de la base de données de terrain sont combinées pour corriger l'altitude ALT_HYB fournie par la centrale inertielle. L'altitude corrigée ALT_HYB_COR est fournie à l'utilisateur. L'utilisateur peut être le pilote ou un calculateur.

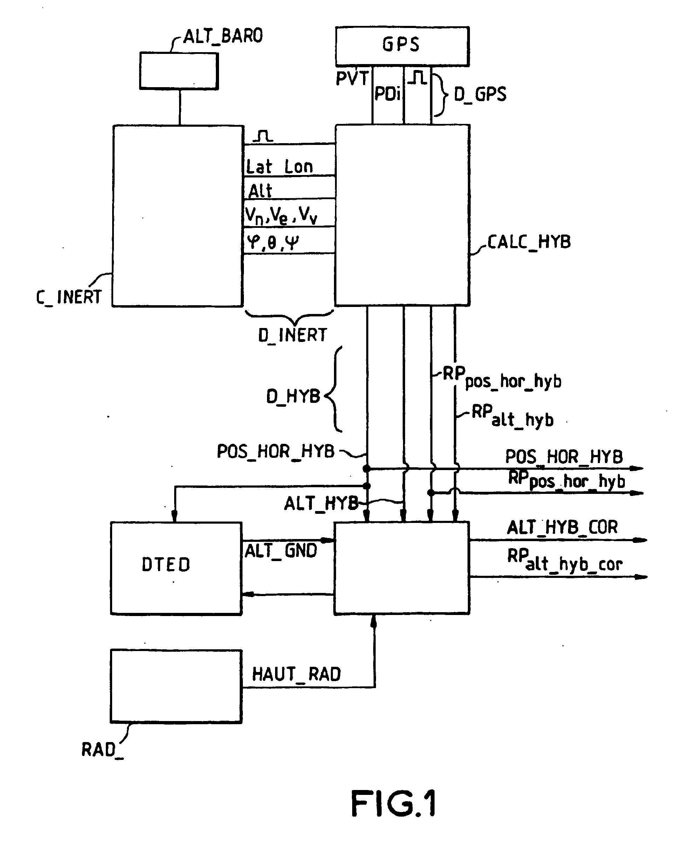

Le calcul de l'altitude corrigée est fait dans le calculateur d'hybridation CALC_HYB ou dans un calculateur séparé. Pour la clarté de la compréhension de la figure 1, on a représenté un calculateur séparé qui reçoit les données de la radiosonde, de la base de données de terrain et du calculateur d'hybridation, et qui fournit une altitude corrigée ALT_HYB_COR qui vient se substituer à l'altitude hybride dans les données hybrides D_HYB fournies à l'utilisateur. Ce calculateur fournit également le rayon de protection RPalt_hyb_cor de l'altitude corrigée.

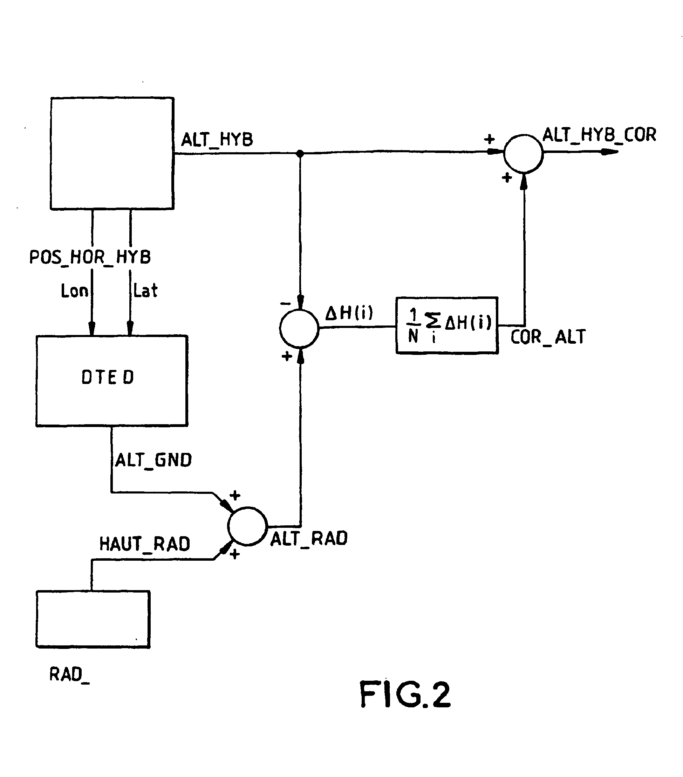

La figure 2 représente le principe de calcul de l'altitude corrigée.

La centrale hybride fournit une position horizontale hybride POS_HOR_HYB de l'aéronef, sous forme d'une longitude et une latitude géographiques. Cette position est appliquée en entrée de la base de données de terrain DTED. Une altitude correspondante du terrain ALT_GND à cette position est fournie.

Cette altitude ALT_GND est ajoutée à la hauteur HAUT_RAD fournie par la radiosonde, pour fournir une altitude de l'aéronef en repère terrestre, ALT_RAD.

$$ALT\_RAD = ALT\_GND + HAUT\_RAD$$

A ce stade, on pourrait prévoir que cette altitude ALT_RAD constitue l'altitude corrigée qui peut remplacer purement et simplement l'altitude hybride fournie par la centrale inertielle. La radiosonde et la base de données serviraient dans ce cas directement à recaler la centrale inertielle à la place du récepteur GPS lorsque ce dernier fournit des mesures insuffisamment précises.

Toutefois, on préfère procéder d'une manière différente et lisser le calcul de l'écart, en effectuant un filtrage numérique sur une succession d'échantillons de mesure successifs pour lesquels on évalue l'écart AH(i) (indice i représentant le numéro de l'échantillon) entre l'altitude ALT_HYB donnée par la centrale inertielle et l'altitude ALT_RAD donnée par la radiosonde associée à la base de données de terrain.

$$\Delta H(i) = ALT\_RAD(i) - ALT\_HYB(i)$$

Dans une première variante de réalisation, on moyenne simplement les écarts sur N échantillons successifs. La moyenne est une moyenne glissante, les N derniers échantillons étant considérés à chaque fois. On calcule un écart moyen $\Delta Hm = (1/N)$[somme de 1 à N des $\Delta H(i)$]. C'est cet écart moyen qui constitue la-valeur de correction COR_ALT, qui est ajoutée à l'altitude hybride ALT_HYB pour donner une altitude corrigée ALT_HYB_COR.

$$ALT\_HYB\_COR = ALT\_HYB + COR\_ALT$$

donc ici ALT_HYB_COR = ALT_HYB + $\Delta$Hm

Dans une deuxième variante de réalisation, le filtrage peut être un filtrage intégrateur du premier ordre, dans lequel une boucle de réaction établit une valeur de correction d'altitude COR_ALT par intégration d'un signal d'erreur représentant la différence entre l'altitude ALT_RAD donnée par la radiosonde et la somme de l'altitude hybride ALT_HYB et de la valeur de correction COR_ALT calculée pour un échantillon précédent. Le signal d'erreur représente donc la différence entre l'écart constaté et une correction d'altitude calculée précédemment.

$$\varepsilon = (ALT\_RAD) - (ALT\_HYB) - (COR\_ALT)$$

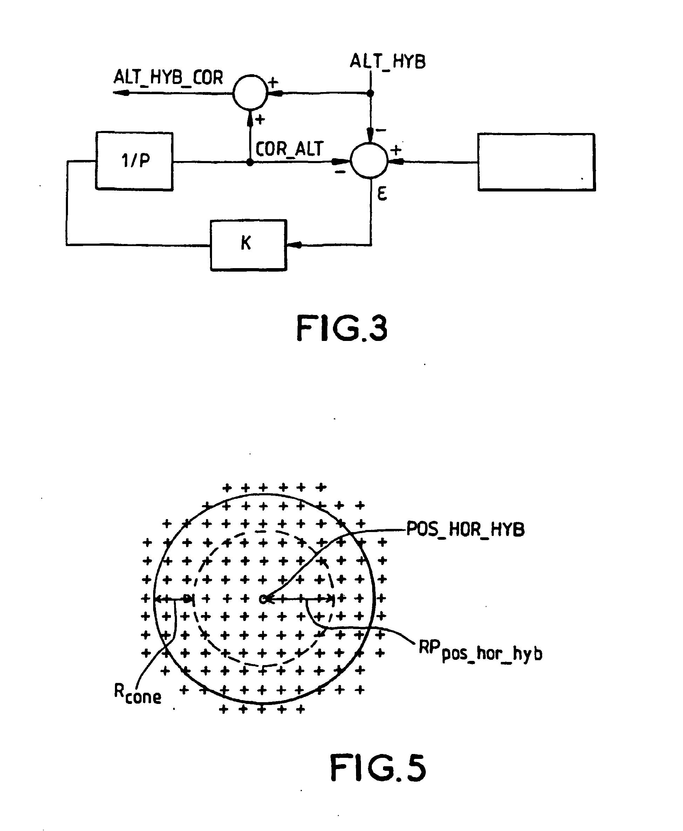

Dans l'exemple représenté à la figure 3, la fonction de filtrage est du premier ordre (en 1/p si p est la variable de Laplace), avec un gain de boucle K, mais elle pourrait être plus complexe (deuxième ordre par exemple, ou plus).

On va maintenant expliquer comment on peut déterminer un rayon de protection de la mesure d'altitude corrigée, sachant que dans les applications où les mesures sont critiques il est nécessaire de connaître ce rayon de protection et de déclencher des alarmes ou prendre des décisions de pilotage en fonction de la valeur du rayon de protection calculé.

On rappelle que le rayon de protection RP d'une mesure, pour une probabilité de non-détection d'erreur prédéterminée PND, est une borne supérieure de l'écart entre la valeur calculée et la valeur réelle de la grandeur mesurée, telle qu'on a une probabilité inférieure à PND que la valeur réelle soit éloignée de la valeur calculée d'une distance supérieure à RP. Il y a donc une probabilité maximale PND pour que la valeur réelle soit en dehors d'un cercle de rayon RP autour de la valeur qu'on a trouvée par calcul, ou encore une probabilité maximale PND pour que l'erreur réelle de mesure excède le rayon de protection annoncé. Ceci revient encore à dire qu'on a une probabilité maximale PND de s'être trompé dans la détermination du rayon de protection.

En général, on se fixe la probabilité maximale PND, en fonction de l'application. Dans l'exemple de l'atterrissage d'un aéronef par exemple, on peut souhaiter une probabilité maximale PND de $10^{-7}$/heure de se tromper sur le rayon de protection en raison d'un défaut prévisible ou imprévisible.

Or le rayon de protection est lié directement à la variance de la grandeur mesurée (ou son écart-type) et à la probabilité de non détection d'erreur PND. La variance est le carré de l'écart-type Σ lié à la grandeur mesurée.

Le rayon de protection RP est lié à l'écart-type Σ et la probabilité de non-détection PND par le tableau approximatif suivant,

| Valeur de PND | Valeur de RP |
|---|---|
| 0,35/heure | Σ |
| $5.10^{-2}$/heure | 2Σ |
| $10^{-3}$/heure | 3Σ |
| $10^{-7}$/heure | 5,7Σ |
| $10^{-9}$/heure | 7Σ |

Selon la probabilité de non-détection qu'on se fixe (et donc selon l'application envisagée) on peut donc déterminer un coefficient k tel que le rayon de protection RP soit égal à kΣ. Le coefficient k prend une valeur comprise entre 1 et 7 dans le tableau précédent.

Ce rayon de protection est calculé à partir des écarts-types des variables considérées. Il s'applique à chaque variable possible, mais en pratique on s'intéresse ici aux variables de distance.

Un calcul de rayon de protection est fait au sein du calculateur d'hybridation, en présence d'erreurs modélisées dans le filtre de Kalman. Ce calcul fait intervenir notamment les variances prélevées dans la matrice de covariance du filtre de Kalmann. La racine carrée de chaque variance donne un écart-type. L'écart type permet de déterminer un rayon de protection. Le calcul du rayon de protection peut être plus complexe qu'une simple multiplication de l'écart-type par un coefficient k ; c'est notamment le cas quand on cherche à déterminer un rayon de protection en présence de panne d'un satellite dans le récepteur GPS. Dans ce cas, en supposant qu'un rayon de protection a été calculé pour une probabilité de non-détection PND correspondant à un facteur k dans le tableau ci-dessus, on considérera par hypothèse que la variable de position affectée par ce rayon de protection RP est une variable dont l'écart-type supposé est RP/k.

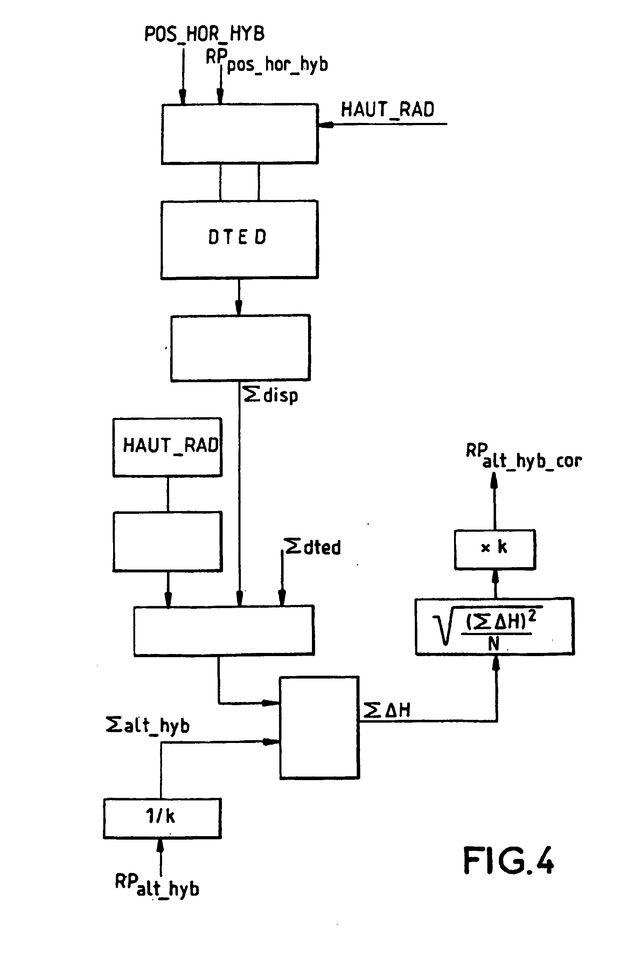

La figure 4 représente le calcul de rayon de protection qui est fait selon l'invention.

La centrale inertielle hybride fournit un rayon de protection RPpos_hor_hyb pour la mesure de position horizontale hybride et un rayon de protection RP_alt_hyb pour la mesure d'altitude hybride.

Au rayon de protection en altitude RP_alt_hyb on associe un écart-type Σalt_hyb en divisant simplement le rayon de protection par un facteur k=k1 correspondant à la probabilité de non détection qu'on se fixe. On prendra par exemple k1=5,7 pour une probabilité de $10^{-7}$/heure.

$$\Sigma alt\_hyb = (RP\_alt\_hyb)/k1$$

On calcule par ailleurs un écart-type Zalt_rad de la mesure d'altitude RAD_ALT fournie par la radiosonde associée à la base de données de terrain. Cet écart-type résulte de trois paramètres : l'imprécision propre de la radiosonde, exprimée sous forme d'un écart-type Σhaut-rad ; l'imprécision propre de la base de données de terrain DTED, exprimée également sous forme d'un écart-type Σdetd ; et une dispersion d'altitudes du sol qui existe dans la région qui entoure la position de l'aéronef, cette dispersion étant encore exprimée sous forme d'un écart-type Σdisp.

Si l'imprécision de la radiosonde est par exemple de 1% et que la hauteur qu'elle fournit est de 1000 mètres, on considérera que l'écart-type Σhaut-rad est de 10 mètres.

L'imprécision de l'altitude de terrain fournie par la base de données est donnée par le producteur de cette base. Elle peut dépendre de la région considérée et de la résolution du maillage de la base.

L'écart-type de dispersion d'altitudes de terrain dans la région survolée est calculé à partir du rayon de protection horizontal RPpos_hor_hyb fourni par la centrale inertielle hybride. Pour cela, on détermine pour chaque maille de la base de données de terrain, à l'intérieur d'une zone entourant la position horizontale POS_HOR_HYB fournie par la centrale inertielle, l'écart entre l'altitude du sol dans cette maille et l'altitude ALT_GND correspondant à la position horizontale de l'aéronef.

La figure 5 représente la zone dans laquelle on calcule ces écarts ; cette zone est déterminée à partir du rayon de protection horizontal. Elle peut être définie par un cercle centré sur la position horizontale POS_HOR_HYB et ayant pour rayon le rayon de protection RPpos_hor_hyb donné par la centrale inertielle pour la position horizontale ; le cercle pointillé sur la figure 5 représente cette zone.

Toutefois, on peut également tenir compte dans ce calcul du fait qu'en général une radiosonde émet une onde radioélectrique non pas selon un axe vertical (qui donnerait exactement la hauteur au dessus du sol) mais selon un cône d'axe vertical (l'aéronef étant supposé horizontal) et d'ouverture environ 45°. Ce cône introduit un certain degré d'incertitude sur la distance entre l'aéronef et un obstacle au sol situé à cette distance D ; l'obstacle est bien à distance D, mais l'aéronef n'est pas forcément situé à une hauteur D au-dessus de cet obstacle si l'obstacle n'est pas à la verticale de l'aéronef.

Pour cette raison, on préférera calculer la dispersion d'altitudes de terrain à l'intérieur d'un cercle dont le rayon est non pas le rayon de protection RPpos_hor_hyb mais la somme de ce rayon et d'un rayon Rcone correspondant au rayon du cercle d'illumination du sol par la radiosonde. Si l'angle du cône d'illumination est $2\alpha$, le rayon Rcone est (HAUT_RAD)tga.

Le cercle de rayon [(RPpos_hor_hyb) +Rcone] est représenté en traits pleins sur la figure 5.

A l'intérieur du cercle ainsi défini à partir du rayon de protection et éventuellement de la hauteur HGAUT_RAD donnée par la radiosonde, on calcule tous les écarts entre l'altitude du sol (ALT_GND) à la position de l'aéronef et l'altitude du sol aux points voisins. On fait la moyenne quadratique de ces écarts pour définir un écart-type $\Sigma$disp représentant la dispersion d'altitude du sol à l'intérieur de ce cercle.

Avec les trois écarts-types $\Sigma$haut_rad, $\Sigma$dted, et $\Sigma$disp, on calcule un écart-type global $\Sigma$ait_rad de la mesure d'altitude fournie par la radiosonde associée à la base de données de terrain. Cet écart-type est la somme quadratique des trois écarts précédents, soit la racine carrée de [$(\Sigma$haut_rad$)^2$+ $(\Sigma$dted$)^2$ + $(\Sigma$disp$)^2$].

$$(\Sigma\text{alt\_rad})^2 = (\Sigma\text{haut\_rad})^2+ (\Sigma\text{dted})^2 + (\Sigma\text{disp})^2$$

De la même manière, l'écart-type $\Sigma\Delta$H de l'écart $\Delta$H entre l'altitude fournie par la centrale inertielle et l'altitude fournie par la radiosonde, est la somme quadratique de l'écart-type $\Sigma$alt_hyb de la centrale inertielle et l'écart-type $\Sigma$alt_rad de l'altitude fournie par la radiosonde.

$$(\Sigma\Delta\text{H})^2 = (\Sigma\text{alt\_hyb})^2 + (\Sigma\text{alt\_rad})^2$$

Mais pour calculer l'écart moyen entre ces altitudes, on rappelle qu'on moyenne ou qu'on filtre cet écart, réduisant ainsi fortement l'écart-type de la correction d'altitude. L'écart-type de l'altitude corrigée est le même que l'écart-type de la correction d'altitude, l'incertitude sur l'altitude hybride ayant déjà été prise en compte.

Dans le cas où la correction d'altitude COR_ALT est la moyenne glissante sur les N échantillons précédents de l'écart entre les deux altitudes, on peut dire que l'écart-type Zalt_hyb_cor de l'altitude corrigée ALT_HYB_COR, égal à l'écart-type $\Sigma$cor_alt de la correction COR_ALT, est l'écart-type $\Sigma\Delta$H divisé par la racine carrée du nombre d'échantillons pris en compte dans la moyenne.

$$(\Sigma\text{alt\_hyb\_cor})^2 = (\Sigma\text{cor\_alt})^2 = (\Sigma\Delta\text{H})^2/\text{N}$$

Cet écart-type est nettement plus faible que l'écart-type de l'information d'altitude donnée par la centrale hybride dès lors que le nombre d'échantillons est suffisamment élevé.

A partir de cet écart-type, on peut calculer un rayon de protection RPalt_hyb_cor de l'altitude corrigée. Le rayon de protection est égal à l'écart-type multiplié par le coefficient k correspondant à la probabilité de non-détection désirée.

Lorsqu'on fait le calcul de la moyenne des écarts entre les deux altitudes, on peut par ailleurs effectuer un contrôle du fait que les échantillons d'écart d'altitudes $\Delta$H(i) suivent une loi statistique prévisible, et déclencher une alarme dans le cas contraire. De cette manière, on contrôle la cohérence des indications fournies par la centrale inertielle et par la radiosonde. On fera pour cela une moyenne quadratique des écarts, normés par leur écart-type respectif, sur N échantillons successifs de mesure d'écart.

Si i représente l'indice d'un échantillon, l'écart $\Delta$H(i) pour un échantillon donné, est divisé par l'écart-type $\Sigma\Delta$H (i) correspondant. Le rapport entre l'écart mesuré et l'écart-type devrait être une variable qui suit une loi du Khi$^2$ à N degrés de liberté, en conséquence de quoi on contrôle la conformité à cette loi en calculant d'abord la moyenne quadratique de ce rapport, sur N échantillons, et en comparant cette moyenne à un seuil. Ce seuil est déterminé, en fonction du nombre N d'échantillons et en fonction d'un taux de fausse alarme accepté.

La moyenne quadratique calculée est la racine carrée de l'expression suivante : (1/N){somme des N valeurs $[\Delta\text{H}(i)/ \Sigma\Delta\text{H}(i)]^2$}.

Si la correction d'altitude est effectuée par filtrage numérique des écarts constatés, plutôt que par la moyenne, on comprend qu'on peut aussi définir un écart-type de la valeur corrigée, plus faible que celui de l'altitude fournie par la centrale inertielle dès lors que la boucle de réaction qui calcule la correction converge vers une situation stable. L'écart-type de la valeur corrigée est déterminé à partir de la variance de l'écart ΔH constaté entre les deux mesures d'altitude. Cette variance peut être calculée comme on le fait dans un filtrage de Kalman à partir de la matrice de propagation des variances qui décrit la boucle de filtrage utilisé.

On a décrit l'invention avec une seule radiosonde, mais il va de soi qu'on pourrait utiliser plusieurs radiosondes pour réduire les risques de défauts dus à des pannes matérielles de la radiosonde.

**Revendications**

1. Système d'aide à la navigation embarqué dans un aéronef, comprenant une centrale de navigation inertielle (C_INERT) fournissant une position horizontale et une altitude (ALT_HYB) en repère terrestre; et comprenant au moins un moyen (RAD_SONDE) pour fournir une mesure de la hauteur (HAUT-RAD) de l'aéronef par rapport au sol, une base de données de terrain fournissant une altitude du sol correspondant à la position horizontale délivrée par la centrale inertielle, et des moyens pour corriger l'altitude fournie par la centrale inertielle en utilisant les données issues du moyen pour fournir la hauteur et de la base de données de terrain, **caractérisé en ce qu'**il comprend en outre des moyens pour fournir un rayon de protection associé à la position horizontale fournie par la centrale inertielle et des moyens de calcul fournissant un rayon de protection associé à l'altitude corrigée, dans lequel le rayon de protection associé à l'altitude corrigée est une valeur de distance, autour de l'altitude mesurée, telle qu'on peut considérer que l'altitude exacte est effectivement située dans ce rayon autour de l'altitude mesurée, avec un degré de confiance choisi, et dans lequel le rayon de protection associé à l'altitude corrigée est calculé en fonction de la dispersion de l'altitude du sol telle que contenue dans la base de données de terrain, à l'intérieur d'une zone de terrain limitée centrée sur la position horizontale fournie par la centrale inertielle.

2. Système selon la revendication 1, **caractérisé en ce que** la dispersion de l'altitude est calculée dans une zone dont le rayon est défini à partir du rayon de protection de la position horizontale.

3. Système selon la revendication 2, **caractérisé en ce que** la dispersion de l'altitude est calculée dans une zone dont le rayon est la somme du rayon de protection de la position horizontale et d'une valeur représentant une imprécision de mesure du moyen pour fournir la hauteur, cette valeur étant de préférence e rayon d'un cercle d'illumination radioélectrique du sol par la radiosonde dans le cas où le moyen pour fournir la hauteur est une radiosonde.

4. Système selon l'une des revendications 1 à 3, **caractérisé en ce que** les moyens de calcul du rayon de protection de l'altitude corrigée comprennent un moyen de calcul d'une somme quadratique d'un écart-type (Σalt_rad) lié au calcul de la somme de la hauteur par rapport au sol (HAUT_RAD) et de l'altitude du sol (ALT_GND), et d'un écart-type (Σalt_hyb) lié à l'altitude issue de la centrale inertielle (ALT_HYB), et un moyen pour calculer un écart-type et un rayon de protection de l'altitude corrigée, à partir de la somme quadratique calculée et moyennée sur N échantillons de mesure successifs.

5. Système selon la revendication 4, **caractérisé en ce que** l'écart type lié au calcul de la somme de la hauteur par rapport au sol et de l'altitude du sol est la moyenne quadratique de plusieurs écarts types parmi lesquels un écart-type (Σdisp) représentant la dispersion d'altitude du sol.

6. Système d'aide à la navigation selon l'une des revendications précédentes, **caractérisé en ce qu'**il comporte des moyens pour calculer un écart (ΔH) entre l'altitude (ALT_HYB) délivrée par la centrale inertielle et une altitude (ALT_RAD) calculée à partir de la hauteur (HAUT_RAD) fournie par la radiosonde et d'une altitude de sol (ALT_GND) élaborée à partir de la base de données de terrain.

7. Système selon la revendication 6, **caractérisé en ce qu'**il comprend les moyens de calcul de l'écart (ΔH) comprennent des moyens pour soustraire l'altitude fournie par la centrale inertielle de la somme de la hauteur (HAUT_RAD) fournie par la radiosonde et de l'altitude de sol (ALT_GND) fournie par la base de données pour la position horizontale fournie par la centrale.

8. Système selon la revendication 7, **caractérisé en ce qu'**il comprend des moyens de calcul pour lisser la valeur de l'écart (ΔH) sur plusieurs mesures correspondant à plusieurs valeurs successives de position et d'altitude fournies par la centrale inertielle.

9. Système selon la revendication 8, **caractérisé en ce que** les moyens de lissage comprennent des moyens pour calculer la moyenne, glissante de N écarts successifs (ΔH(i)) correspondant à N altitudes successives fournies par la centrale inertielle, et des moyens pour ajouter la moyenne glissante à l'altitude courante (ALT_HYB) fournie par la centrale inertielle, pour donner une altitude corrigée (ALT_HYB_COR)

10. Système selon la revendication 9, **caractérisé en ce que** les moyens de lissage comprennent une boucle de filtrage numérique établissant une valeur de correction d'altitude (COR_ALT) par intégration d'un signal d'erreur (ε) représentant la différence entre l'écart (ΔH) et la correction d'altitude issue de la boucle pour une mesure précédente.

11. Système selon l'une des revendications 1 à 10, **caractérisé en ce que** la centrale inertielle est une centrale hybridée avec un récepteur de positionnement par satellites.

**Claims**

1. An onboard navigation aid system in an aircraft, comprising an inertial navigation unit (C_INERT) supplying a horizontal position and an altitude (ALT_HYB) in a terrestrial reference frame, and comprising at least one means (RAD_SONDE) for supplying a measurement of the height (HAUT-RAD) of the aircraft relative to the ground, a terrain database supplying an altitude of the ground corresponding to the horizontal position delivered by the inertial unit, and means for correcting the altitude supplied by the inertial unit by using the data originating from the means for supplying the height and the terrain database, **characterized in that** it also comprises means for supplying a radius of protection associated with the horizontal position supplied by the inertial unit and computing means supplying a radius of protection associated with the corrected altitude, in which the radius of protection associated with the corrected altitude is a value of a distance, around the measured altitude, such that one can consider that the exact altitude is indeed located within this radius around the measured altitude, with a chosen degree of reliability, and in which the radius of protection associated to the corrected altitude is computed as a function of the dispersion of the altitude of the ground as contained in the terrain database, within a limited zone of terrain centered on the horizontal position supplied by the inertial unit.

2. The system as claimed in claim 1, **characterized in that** the altitude dispersion is computed in a zone the radius of which is defined based on the radius of protection of the horizontal position.

3. The system as claimed in claim 2, **characterized in that** the altitude dispersion is computed in a zone the radius of which is the sum of the radius of protection of the horizontal position and of a value representing an inaccuracy of measurement of the means for supplying the height, this value preferably being the radius of a circle of radio illumination of the ground by the radiosonde in the case where the means for supplying the height is radiosonde.

4. The system as claimed in one of claims 1 to 3, **characterized in that** the means of computing the radius of protection of the corrected altitude comprise a means of computing a quadratic sum of a standard deviation ($\Sigma$alt_rad) linked to the computation of the sum of the height relative to the ground (HAUT_RAD) and of the altitude of the ground (ALT_GND) and of a standard deviation ($\Sigma$alt_hyb) linked to the altitude originating from the inertial unit (ALT_HYB), and a means for computing a standard deviation and a radius of protection of the corrected altitude, based on the quadratic sum computed and averaged over N successive measurement samples.

5. The system as claimed in claim 4, **characterized in that** the standard deviation linked to the computation of the sum of the height relative to the ground and of the altitude of the ground is the quadratic average of several standard deviations including a standard deviation ($\Sigma$disp) representing the altitude dispersion of the ground.

6. The navigation aid system as claimed in one of the preceding claims, **characterized in that** it comprises means for computing a deviation (ΔH) between the altitude (ALT_HYB) delivered by the inertial unit and an altitude (ALT_RAD) computed based on the height (HAUT_RAD) supplied by the radiosonde and on an altitude of the ground (ALT_GND) generated from the terrain database.

7. The system as claimed in claim 6, **characterized in that** the means of computing the deviation (ΔH) comprise means for subtracting the altitude supplied by the inertial unit from the sum of the height (HAUT_RAD) supplied by the radiosonde and of the ground altitude (ALT_GND) supplied by the database for the horizontal position supplied by the unit.

8. The system as claimed in claim 7, **characterized in that** it comprises computing means for smoothing the value of the deviation ($\Delta H$) over several measurements corresponding to several successive values of position and of altitude supplied by the inertial unit.

9. The system as claimed in claim 8, **characterized in that** the smoothing means comprise means for computing the sliding average of N successive deviations ($\Delta H(i)$) corresponding to N successive altitudes supplied by the inertial unit, and means for adding the sliding average to the current altitude (ALT_HYB) supplied by the inertial unit, to give a corrected altitude (ALT_HYB_COR) .

10. The system as claimed in claim 9, **characterized in that** the smoothing means comprise a digital filtering loop establishing an altitude correction value (COR_ALT) by integration of an error signal ($\varepsilon$) representing the difference between the deviation ($\Delta H$) and the altitude correction originating from the loop for a previous measurement.

11. The system as claimed in one of claims 1 to 10, **characterized in that** the inertial unit is a unit hybridized with a satellite positioning receiver.


**Patentansprüche**

1. System zur Navigationsunterstützung, das an Bord eines Luftfahrzeugs installiert ist und eine Trägheitsnavigationszentrale (C_INERT) umfasst, die eine horizontale Lage und eine Höhe (ALT_HYB) in Bezug auf Bodenkoordinaten liefert und Folgendes umfasst: wenigstens ein Mittel (RAD_SONDE) zum Liefern eines Messwertes für die Höhe (HAUT-RAD) des Luftfahrzeugs relativ zum Boden, wobei eine Geländedatenbank eine Höhe vom Boden liefert, die der von der Trägheitszentrale gelieferten horizontalen Lage entspricht, und Mittel zum Korrigieren der von der Trägheitszentrale gelieferten Höhe unter Verwendung der von dem Mittel ausgegebenen Daten zum Liefern der Höhe und der Geländedatenbank, **dadurch gekennzeichnet, dass** es ferner Mittel zum Liefern eines Schutzradius umfasst, der mit der von der Trägheitszentrale gelieferten horizontalen Lage assoziiert ist, und Rechenmittel, die einen Schutzradius liefern, der mit der korrigierten Höhe assoziiert ist, wobei der mit der korrigierten Höhe assoziierte Schutzradius ein Distanzwert um die gemessene Höhe ist, so dass die genaue Höhe mit einem gewählten Konfidenzgrad effektiv als in diesem Radius um die gemessene Höhe befindlich gesehen werden kann, und wobei der mit der korrigierten Höhe assoziierte Schutzradius in Abhängigkeit von der Verteilung der Höhe vom Boden wie in der Geländedatenbank enthalten im Innern einer begrenzten Geländezone auf der von der Trägheitszentrale gelieferten horizontalen Lage zentriert berechnet wird.

2. System nach Anspruch 1, **dadurch gekennzeichnet, dass** die Höhenverteilung in einer Zone berechnet wird, deren Radius vom Schutzradius der horizontalen Lage definiert wird.

3. System nach Anspruch 2, **dadurch gekennzeichnet, dass** die Höhenverteilung in einer Zone berechnet wird, deren Radius die Summe des Schutzradius der horizontalen Lage und eines Wertes ist, der eine Messungenauigkeit des Mittels zum Liefern der Höhe repräsentiert, wobei dieser Wert vorzugsweise der Radius eines radioelektrischen Beleuchtungskreises vom Boden durch die Radiosonde in dem Fall ist, in dem das Mittel zum Liefern der Höhe eine Radiosonde ist.

4. System nach einem der Ansprüche 1 bis 3, **dadurch gekennzeichnet, dass** die Mittel zum Berechnen des Schutzradius der korrigierten Höhe ein Mittel zum Berechnen einer quadratischen Summe einer Standardabweichung ($\Sigma alt\_rad$) in Verbindung mit der Berechnung der Summe der Höhe in Bezug auf den Boden (HAUT_RAD) und der Höhe vom Boden (ALT_GND) und einer Standardabweichung ($\Sigma alt\_hyb$) in Verbindung mit der von der Trägheitszentrale (ALT_HYB) ausgegebenen Höhe und ein Mittel zum Berechnen einer Standardabweichung und eines Schutzradius der korrigierten Höhe von der quadratischen Summe umfassen, die an N Abtastwerten von aufeinander folgenden Messungen berechnet und gemittelt wird.

5. System nach Anspruch 4, **dadurch gekennzeichnet, dass** die Standardabweichung in Verbindung mit der Berechnung der Summe der Höhe in Bezug auf den Boden und der Höhe vom Boden der quadratische Mittelwert von mehreren Standardabweichungen ist, unter denen eine Standardabweichung ($\Sigma disp$) die Höhenverteilung vom Boden repräsentiert.

6. System zur Navigationsunterstützung nach einem der vorherigen Ansprüche, **dadurch gekennzeichnet, dass** es Mittel zum Berechnen einer Abweichung ($\Delta H$) zwischen der von der Trägheitszentrale gelieferten Höhe (ALT_HYB) und einer Höhe (ALT_RAD) umfasst, die von der von der Radiosonde gelieferten Höhe (HAUT_RAD) und einer Höhe vom Boden (ALT_GND) berechnet wird, die aus der Geländedatenbank ausgearbeitet wurde.

7. System nach Anspruch 6, **dadurch gekennzeichnet, dass** die Mittel zum Berechnen der Abweichung (ΔH) Mittel zum Subtrahieren der von der Trägheitszentrale gelieferten Höhe von der Summe der von der Radiosonde gelieferten Höhe (HAUT_RAD) und der von der Datenbank gelieferten Bodenhöhe (ALT_GND) für die von der Zentrale gelieferte horizontale Lage umfassen.

8. System nach Anspruch 7, **dadurch gekennzeichnet, dass** es Rechenmittel zum Glätten des Wertes der Abweichung (ΔH) über mehrere Messwerte umfasst, die mehreren von der Trägheitszentrale gelieferten, aufeinander folgenden Lage- und Höhenwerten entsprechen.

9. System nach Anspruch 8, **dadurch gekennzeichnet, dass** die Glättungsmittel Mittel zum Berechnen des gleitenden Mittelwerts von N aufeinander folgenden Abweichungen (ΔH(i)), die N aufeinander folgenden, von der Trägheitszentrale gelieferten Höhen entsprechen, und Mittel zum Addieren des gleitenden Mittelwerts zu der von der Trägheitszentrale gelieferten laufenden Höhe (ALT_HYB) umfassen, um eine korrigierte Höhe (ALT_HYB_COR) zu erhalten.

10. System nach Anspruch 9, **dadurch gekennzeichnet, dass** die Glättungsmittel eine digitale Filterschleife umfassen, die einen Höhenkorrekturwert (COR_ALT) durch Integrieren eines Fehlersignals (ε) erzeugen, der die Differenz zwischen der Abweichung (ΔH) und der von der Schleife für eine vorherige Messung ausgegebene Höhenkorrektur repräsentiert.

11. System nach einem der Ansprüche 1 bis 10, **dadurch gekennzeichnet, dass** die Trägheitszentrale eine hybridisierte Zentrale mit einem Positionierungsempfänger per Satellit ist.

FIG.1

FIG.2

# FIG.3

# FIG.5

POS_HOR_HYB
$RP_{pos\_hor\_hyb}$

HAUT_RAD

DTED

$\Sigma disp$

HAUT_RAD

$\Sigma dted$

$RP_{alt\_hyb\_cor}$

$\times k$

$\sqrt{\dfrac{(\Sigma \Delta H)^2}{N}}$

$\Sigma \Delta H$

$\Sigma alt\_hyb$

$1/k$

$RP_{alt\_hyb}$

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 6157891 A